# EUROPÄISCHE PATENTSCHRIFT

(11) **EP 1 702 745 B1**
(45) Veröffentlichungstag und Bekanntmachung des Hinweises auf die Patenterteilung: **13.06.2007**
(21) Anmeldenummer: 05005124.2
(22) Anmeldetag: 09.03.2005
(51) Int. Cl.: B29D 31/00, B29C 41/04, B29C 41/36, B29C 44/08, B29C 41/20

(54) **Verfahren zur Herstellung einer nahtlosen Druckform, sowie Druckwalze mit flexibler Oberfläche**
Method for producing a seamless printing form and printing roller with flexible surface layer
Procédé de fabrication d'une forme d'impression sans ligne de soudure et cylindre d'impression avec couche superficielle flexible

(43) Veröffentlichungstag der Anmeldung: 20.09.2006
(73) Patentinhaber: Van der Velden & Kesper B.V., NL-5431 NZ Cuijk (NL)
(72) Erfinder: Henk van der Velden, 5431 NZ Cuijk (NL)
(74) Vertreter: Cohausz & Florack

(56) Entgegenhaltungen:
- EP-A- 0 671 253
- EP-A- 0 678 793
- US-A- 3 607 494
- US-A- 3 978 181
- US-A- 4 113 825
- US-A- 5 089 201

## Beschreibung

Die Erfindung betrifft ein Verfahren zur Herstellung einer nahtlosen Druckform für den Rotationsdruck, insbesondere den flexiblen Tiefdruck und Flexodruck, bei welchem eine zylinderförmige Stützkonstruktion koaxial in eine zylinderförmige Gießform eingebracht wird, wobei ein Hohlraum zwischen der Außenfläche der Stützkonstruktion und der Innenwand der Gießform erzeugt wird, der Hohlraum durch jeweils ein an den Enden der Stützkonstruktion angebrachtes Ringelement seitlich abgeschlossen wird, das elastische Material in den Hohlraum eingebracht wird und wobei dadurch, dass die Stützkonstruktion gemeinsam mit der Gießform in Rotation versetzt wird, das elastische Material aufgrund der Zentrifugalkraft gleichmäßig an der Innenwand der Gießform verteilt wird. Weiter betrifft die Erfindung eine Druckwalze für den Rotationsdruck.

Ein Verfahren dieser Art ist aus der europäischen Patentschrift EP 0 671 253 B1 bekannt.

In dieser Patentschrift wurde bereits prinzipiell die Herstellung einer nahtlosen Druckform für den Rotationsdruck beschrieben, bei der eine zylindrische Stützstruktur, deren Umfangsfläche perforiert ist, in einer Gußform auf einer sich drehenden Vorrichtung positioniert wird und in den inneren Hohlraum der Stützstruktur ein elastisches, auf Silikon basierendes Material eingebracht wird. Durch eine schnelle Rotation der Gußform zusammen mit der Stützkonstruktion tritt aufgrund der Zentrifugalkraft das elastische Material durch die Löcher der peripheren Wandfläche der Stützstruktur hindurch und verteilt sich auf der Oberfläche der Stützstruktur. Nachdem die erhaltene Beschichtung ausgehärtet ist, wird eine zweite Materialschicht, welche aus einem schaumartigen Material besteht und sich zwischen der Außenfläche der Stützstruktur und der Silikonschicht ausbildet, in gleicher Weise erzeugt. Das Verfahren hat jedoch den Nachteil, dass es sehr unsauber und umständlich ist. Dadurch, dass die Löcher der peripheren Oberfläche der Stützkonstruktion nicht verschlossen werden können, kann das schaumartige Material vor der vollständigen Aushärtung wieder in den inneren Hohlraum der Stützkonstruktion zurückfließen, wodurch es des Weiteren nicht möglich ist, die Dichte des Schaumes genau einzustellen.

Des Weiteren sind in einem anderen Anwendungsgebiet, dem Einsatz von Kopierwalzen in Kopiergeräten, Druckformen mit einer Stützkonstruktion und darauf angeordneten Gummischichten beispielsweise aus der EP 0 678 793 A und der US 3 607 494 A bekannt.

Ausgehend von dem erläuterten Stand der Technik liegt der Erfindung die Aufgabe zugrunde, ein sauberes und einfaches Verfahren zur Herstellung einer nahtlosen Druckform für den Rotationsdruck zur Verfügung zu stellen, bei dem eine genau definierte Menge an elastischen Material auf die Außenfläche der Stützkonstruktion aufgebracht wird.

Gemäß der ersten Lehre der Erfindung ist die zuvor hergeleitete und aufgezeigt Aufgabe dadurch gelöst, dass der Hohlraum durch die Außenfläche der rohrförmigen, geschlossenen Stützkonstruktion, durch die Innenfläche der Gießform und durch die seitlich angebrachten Ringelemente dicht abgeschlossen wird und, dass das elastische Material über in mindestens einem Ringelement befindliche Durchgangsbohrungen in den Hohlraum eingebracht wird. Die Oberfläche der Stützkonstruktion ist nicht mit Löchern versehen sondern geschlossen ausgestaltet, wodurch das elastische Material ausschließlich über die Durchgangsbohrungen, welche sich in einem oder in beiden Ringelementen befinden, in den Hohlraum eintreten kann.

Ein vorteilhafte Ausgestaltung erfährt das Verfahren dadurch, dass in einem ersten Schritt über die Durchgangsbohrungen in den Ringelementen ein elastisches auf Silikon basierendes Material in den Hohlraum in einer den Hohlraum zumindest nicht vollständig ausfüllenden Menge eingebracht wird und die so erhaltende Silikonschicht ausgehärtet wird und in einem zweiten Schritt über die Bohrungen ein schaumartiges Material in den verbleibenden Hohlraum eingebracht wird. Nachdem eine bestimmte Menge des auf Silikon basierenden Materials in den Hohlraum eingebracht wurde, wird die Gießform zusammen mit der Stützkonstruktion und den Ringelementen in Rotation versetzt, so dass sich das Material durch die Zentrifugalkraft gleichmäßig an der Forminnenwand der Gießform verteilt, wodurch eine glatte, geschlossene, Silikonschicht entsteht, die in einem nächsten Schritt aushärtet. Nachdem die Silikonschicht ausgehärtet ist, wird in einem zweiten Schritt eine bestimmte Menge schaumartigen Materials in den Hohlraum zwischen der Außenfläche der Stützkonstruktion und der Silikonschicht über die Bohrungen in dem oder den Ringelementen eingebracht, wodurch eine elastische, druckflexible Zwischenschicht aus Schaum gebildet wird. Dadurch, dass die Silikonschicht an der glatten Innenfläche der Gießform ausgeformt wird, besitzt auch die fertige Silikonschicht eine glatte Außenfläche, bei der der kosten- und zeitintensive Fertigungsschritt des Schleifens der Silikonschicht zur Erzeugung einer glatten Außenschicht der Druckform nicht mehr notwendig ist.

Eine weitere vorteilhafte Ausgestaltung der Erfindung liegt darin, dass nach Einbringung einer bestimmten Menge des schaumartigen Materials in den Hohlraum die Durchgangsbohrungen in den Ringelementen dicht verschlossen werden. Dadurch wird erreicht, dass der eingefüllte Schaum aus dem Hohlraum nicht wieder über die Durchgangsbohrungen in den Ringelementen entweichen kann, wodurch sich in dem Hohlraum ein genau definiertes und bekanntes Volumen an Schaum befindet, durch welches die gewünschte Härte und Dichte des Schaums genau eingestellt werden kann.

Nachdem die einzelnen elastischen Materialschichten ausgehärtet wurden, wird die fertige Druckform bestehend aus der Stützkonstruktion, der auf der Stützkonstruktion befindlichen schaumartigen Schicht und der auf der schaumartigen Schicht befindlichen Silikonschicht aus der Gießform entnommen. Wird die Druckform direkt als Druckwalze eingesetzt, verbleiben die Ringelemente an den beiden Enden der Druckform. Die Druckform kann aber auch als Sleeve eingesetzt werden, wobei die Druckform mittels anlegen von Druckluft am Innenumfang der Druckform reversibel gedehnt wird und anschließend über eine Metallwalze gezogen wird. Wird die Druckform als Sleeve eingesetzt, werden die seitlich an der Druckform angebrachten Ringelemente vor der Montage auf die Metallwalze entfernt.

Abschließend wird mittels eines Lasers eine gewünschte Struktur auf die äußere Silikonschicht der Druckform eingraviert.

Gemäß einer zweiten Lehre der Erfindung betrifft die Erfindung eine Druckwalze für den Rotationsdruck, insbesondere den flexiblen Tiefdruck und Flexodruck, mit einer Stützkonstruktion, mit einer auf der Stützkonstruktion befindlichen schaumartigen Schicht und einer auf der schaumartigen Schicht befindlichen Silikonschicht, insbesondere hergestellt gemäß dem oben beschriebenen Verfahren.

Die hergeleitete und aufgezeigte Aufgabe wird für eine nahtlose Druckform für den Rotationsdruck dadurch gelöst, dass die Stützkonstruktion aus einem Rohr mit geschlossener Umfangsfläche besteht, dass die auf der Stützkonstruktion befindlichen elastischen Materialschichten an beiden Enden durch jeweils ein Ringelement abgeschlossen sind und dass in mindestens einem Ringelement Durchgangsbohrungen zum Einbringen des elastischen Materials vorgesehen sind. Dadurch, dass die Stützkonstruktion aus einem Rohr mit einer geschlossenen Umfangsfläche besteht, ist der Hohlraum bis auf die Durchgangsbohrungen in den Ringelementen dicht abgeschlossen und in den Hohlraum eingebrachtes elastisches Material kann daher nicht über die Stützkonstruktion wieder aus dem Hohlraum austreten.

Wird die Druckform nicht als Sleeve verwendet, sondern als Druckwalze, verbleiben die Ringelemente an der Druckform, wodurch ein weiterer Fertigungsschritt gespart wird.

Die Stützkonstruktion besteht in einer vorteilhaften Ausführungsform im wesentlichen aus einem glasfaserverstärkten Kunststoff, wodurch das Gesamtgewicht der Druckform reduziert wird.

Nachfolgend wird die Erfindung anhand von Zeichnungen erläutert. Es zeigen schematisch
- Fig.1: Längsschnitt einer Gießform mit einer in der Gießform angeordneten Stützkonstruktion, zwei Ringelementen und mit einem sich dadurch bildenden Hohlraum
- Fig. 2: perspektivische Ansicht einer Druckform.

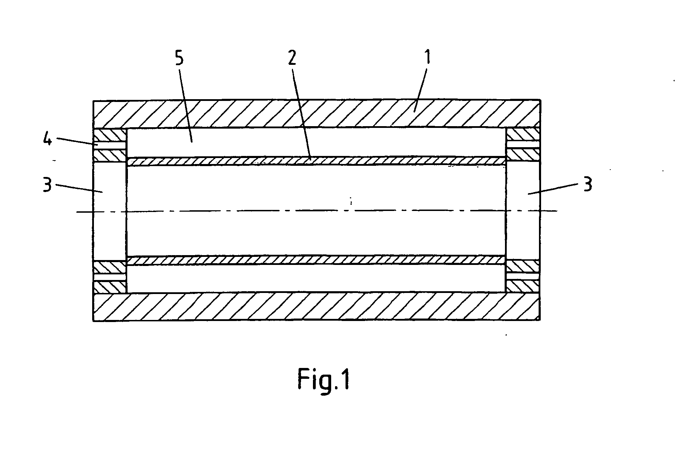

In Fig. 1 ist eine Gießform (1) dargestellt, in der eine Stützkonstruktion (2) koaxial angeordnet ist. Die Stützkonstruktion (2) ist als geschlossenes Rohr vorzugsweise aus glasfaserverstärktem Kunststoff, ersatzweise z.B. aus Metall, ausgebildet, welche einen geringeren Außendurchmesser gegenüber dem Innendurchmesser der Gießform (1) aufweist. An den beiden Enden der Stützkonstruktion (2) befindet sich jeweils ein Ringelement (3) mit einer oder mehreren, vorzugsweise zwei, über dem Querschnitt angeordneten Durchgangsbohrungen (4). Zwischen der Außenfläche der Stützkonstruktion (2) und der Innenfläche der Gießform (1) bildet sich ein Hohlraum (5), der an beiden Seiten durch die Ringelemente (3) abgeschlossen wird. Über die Durchgangsbohrungen (4) in den Ringelementen (3) werden elastische Materialien in den Hohlraum (5) eingeführt. In einem ersten Schritt wird ein auf Silikon basierendes Material in einer bestimmten Menge in den Hohlraum (5) eingebracht. Die Gießform (1) wird dann zusammen mit der Stützkonstruktion (2) in Rotation versetzt, so dass sich durch die Zentrifugalkraft das Silikon an der Innenfläche der Gießform (1) gleichmäßig verteilt. Anschließend wird das Silikon ausgehärtet. In einem zweiten Schritt wird eine bestimmte Menge schaumartigen Materials in flüssiger Form über die Durchgangsbohrungen (4) in den Ringelementen (3) in den verbleibenden Hohlraum (5) zwischen der Außenfläche der Stützkonstruktion (2) und der Silikonschicht (6) eingebracht, welches in dem Hohlraum aufschäumt. Wenn sich die gewünschte Menge des schaumartigen Materials in dem Hohlraum (5) befindet und kein weiteres Material mehr nachgefüllt wird, werden die Durchgangsbohrungen (4) dicht verschlossen, so dass kein Material mehr aus dem Hohlraum (5) entweichen kann. Dadurch kann die Härte und die Dichte des Schaumes genau eingestellt werden. Beispielsweise können die Durchgangsbohrungen durch Stopfen dicht verschlossen werden.

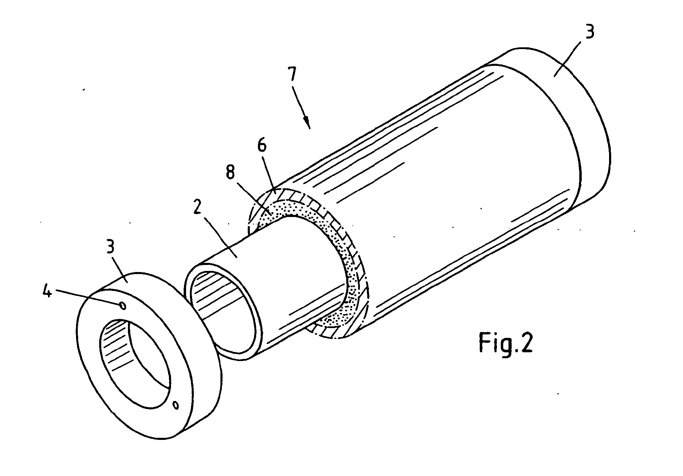

Wie in Fig. 2 dargestellt besteht die fertige Druckform (7) aus der Stützkonstruktion (2), mit der auf der Stützkonstruktion (2) befindlichen elastischen, druckflexiblen Schaumschicht (8) und mit der auf der Schaumschicht (8) befindlichen Silikonschicht (6), welche die gewünschte Glätte besitzt, so dass sie nicht mehr in einem weiteren Fertigungsschritt, z.B. Schleifen, nachbearbeitet werden muss. Die fertige Druckform (7) wird aus der Gießform (1) entnommen und mittels eines Lasers wird abschließend die gewünschte Struktur auf die äußere Silikonschicht (6) der Druckform (7) eingraviert.

Wird die fertige Druckform (7) direkt als Druckwalze verwendet, so verbleiben die beiden Ringelemente (3) an den beiden Enden der Druckform (7).

Die Druckform (7) kann aber auch als Sleeve verwendet werden, wobei die Druckform (7) mittels anlegen von Druckluft am Innenumfang der Druckform (7) reversibel gedehnt wird und anschließend über eine Metallwalze gezogen wird. Wird die Druckform (7) als Sleeve verwendet, werden die Ringelemente (3) vorher von der Druckform (7) entfernt.

## Patentansprüche

1. Verfahren zur Herstellung einer nahtlosen Druckform für den Rotationsdruck, insbesondere den flexiblen Tiefdruck und Flexodruck, bei welchem eine zylinderförmige Stützkonstruktion koaxial in eine zylinderförmige Gießform eingebracht wird, wobei ein Hohlraum zwischen der Außenfläche der Stützkonstruktion und der Innenwand der Gießform erzeugt wird, der Hohlraum durch jeweils ein an den Enden der Stützkonstruktion angebrachtes Ringelement seitlich abgeschlossen wird, das elastische Material in den Hohlraum eingebracht wird und wobei **dadurch**, dass die Stützkonstruktion gemeinsam mit der Gießform in Rotation versetzt wird, das elastische Material aufgrund der Zentrifugalkraft gleichmäßig an der Innenwand der Gießform verteilt wird,
**dadurch gekennzeichnet, dass** der Hohlraum durch die Außenfläche der rohrförmigen, geschlossenen Stützkonstruktion, durch die Innenfläche der Gießform und durch die seitlich angebrachten Ringelemente dicht abgeschlossen wird und, dass das elastische Material über in mindestens einem Ringelement befindliche Durchgangbohrungen in den Hohlraum eingebracht wird.

2. Verfahren nach Anspruch 1,
**dadurch gekennzeichnet, dass** in einem ersten Schritt über die Durchgangsbohrungen in den Ringelementen ein elastisches auf Silikon basierendes Material in den Hohlraum in einer den Hohlraum zumindest nicht vollständig ausfüllenden Menge eingebracht wird und die so erhaltende Silikonschicht ausgehärtet wird und in einem zweiten Schritt über die Bohrungen ein schaumartiges Material in den verbleibenden Hohlraum eingebracht wird.

3. Verfahren nach Anspruch 1 oder 2,
**dadurch gekennzeichnet, dass** nach Einbringung einer bestimmten Menge des schaumartigen Materials in den Hohlraum die Durchgangsbohrungen in den Ringelementen dicht verschlossen werden.

4. Druckwalze für den Rotationsdruck, insbesondere den flexiblen Tiefdruck und Flexodruck, mit einer Stützkonstruktion (2), mit einer auf der Stützkonstruktion (2) befindlichen schaumartigen Schicht (8) und einer auf der schaumartigen Schicht (8) befindlichen Silikonschicht (6), insbesondere hergestellt gemäß einem Verfahren nach einem der Ansprüche 1 bis 3,
**dadurch gekennzeichnet, dass** die Stützkonstruktion (2) aus einem Rohr mit geschlossener Umfangsfläche besteht, dass die auf der Stützkonstruktion (2) befindlichen elastischen Materialschichten an beiden Enden durch jeweils ein Ringelement (3) abgeschlossen sind und dass in mindestens einem Ringelement (3) Durchgangsbohrungen (4) zum Einbringen des elastischen Materials vorgesehen sind.

5. Druckwalze für den Rotationsdruck nach Anspruch 4,
**dadurch gekennzeichnet, dass** die Stützkonstruktion (2) im wesentlichen aus einem glasfaserverstärkten Kunststoff besteht.

## Claims

1. A method for producing a seamless printing block for rotary printing, in particular flexible photogravure printing and flexographic printing, in which a cylindrical supporting structure is inserted coaxially in a cylindrical casting mould, wherein a cavity is produced between the outer surface of the supporting structure and the inner wall of the casting mould, the cavity is sealed laterally by an annular element fitted on each end of the supporting structure and the elastic material is inserted in the cavity, and wherein the elastic material is uniformly distributed on the inner wall of the casting mould due to centrifugal force because the supporting structure is rotatably displaced together with the casting mould, **characterised in that** the cavity is tightly sealed by the outer surface of the tubular closed supporting structure, by the inner surface of the casting mould and by the laterally fitted annular elements, and **in that** the elastic material is inserted in the cavity via through bores located in at least one annular element.

2. The method according to Claim 1, **characterised in that** in a first step an elastic silicone-based material is inserted in the cavity via the through bores in the annular elements in a quantity that at least incompletely fills the cavity and the silicone coat thus obtained is hardened and in a second step a foam-like material is inserted through the bores in the remaining cavity.

3. The method according to Claim 1 or 2, **characterised in that** the through bores in the annular elements are tightly sealed after a certain quantity of the foam-like material is inserted in the cavity.

4. A printing roller for rotary printing, in particular flexible photogravure printing and flexographic printing, with a supporting structure (2), with a foam-like layer (8) on the supporting structure (2) and a silicone coat (6) on the foam-like coat (8), produced in particular according to a method according to one of Claims 1 to 3, **characterised in that** the supporting structure (2) consists of a tube with a closed peripheral surface, **in that** the elastic material layers on the supporting structure (2) are sealed by an annular element (3) on both ends, and **in that** through bores (4) are provided in at least one annular element (3) for inserting the elastic material.

5. The printing roller for rotary printing according to Claim 4, **characterised in that** the supporting structure (2) consists essentially of a glass fibre reinforced plastic.

## Revendications

1. Procédé de fabrication d'une forme d'impression sans ligne de soudure pour l'impression sur rotative, en particulier l'héliogravure flexible et la flexographie, dans lequel une structure de support de forme cylindrique est introduite coaxialement dans un moule de fonderie de forme cylindrique, une cavité est créée entre la surface extérieure de la structure de support et la paroi intérieure du moule de fonderie, la cavité est fermée latéralement, respectivement, par un élément annulaire monté à chacune des extrémités de la structure de support, le matériau élastique est introduit dans la cavité, et dans lequel, du fait que la structure de support est mise en rotation en même temps que le moule de fonderie, le matériau élastique est réparti uniformément sur la paroi intérieure du moule de fonderie sous l'effet de la force centrifuge, **caractérisé en ce que** la cavité est fermée hermétiquement par la surface extérieure de la structure de support tubulaire fermée, par la surface intérieure du moule de fonderie et par les éléments annulaires montés latéralement, et **en ce que** le matériau élastique est introduit dans la cavité en passant par des orifices traversants se trouvant dans un moins un élément annulaire.

2. Procédé selon la revendication 1, **caractérisé en ce que** dans une première étape, un matériau élastique à base de silicone est introduit dans la cavité en passant par les orifices traversants prévus dans les éléments annulaires en une quantité ne remplissant pour le moins pas entièrement la cavité, et la couche de silicone ainsi obtenue est durcie, et dans une deuxième étape, un matériau de type mousse est introduit dans la cavité restante en passant par les orifices.

3. Procédé selon la revendication 1 ou 2, **caractérisé en ce qu'**après l'introduction d'une quantité déterminée du matériau de type mousse dans la cavité, les orifices traversants ménagés dans les éléments annulaires sont fermés hermétiquement.

4. Cylindre d'impression pour l'impression sur rotative, en particulier l'héliogravure flexible et la flexographie, comportant une structure de support (2), comportant une couche de type mousse (8) se trouvant sur la structure de support (2) et une couche de silicone (6) se trouvant sur la couche de type mousse (8), fabriqué en particulier selon un procédé selon une des revendications 1 à 3, dans lequel la structure de support (2) est constituée d'un tube présentant une surface périphérique fermée, les couches de matériau élastiques se trouvant sur la structure de support (2) sont fermées à chacune des deux extrémités par un élément annulaire (3), et en ce que des orifices traversants (4) sont ménagés dans au moins un élément annulaire (3) pour l'introduction du matériau élastique.

5. Cylindre d'impression pour l'impression sur rotative selon la revendication 4, **caractérisé en ce que** la structure de support (2) est constituée essentiellement d'une matière plastique renforcée de fibres de verre.
